# EUROPEAN PATENT APPLICATION

(11) **EP 0 957 006 A2**
(43) Date of publication of application: **17.11.1999**
(21) Application number: 99108482.3
(22) Date of filing: 30.04.1999
(51) Int. Cl.: B60R 21/12

(54) **Transparent removable protecting screen for a taxi**

(30) Priority: 15.05.1998 IT BO980313
(71) Applicant: Work Travel Srl, 45100 Rovigo (IT)
(72) Inventor: Zerilli, Maurizio, 45100 Rovigo (IT)
(74) Representative: Sassatelli, Franco T., Dr.

(57) **Abstract**

A sole thief-proof transparent shab-shape screen in polycarbonate material of appropriate thickness to be made for pressing is provided with dimension in relation to that of the car on which it mast be mounted. Said screen is shaped with back convexity (1) to be in relation with the back limit encumbrance where arrive the backs of the front seats so permitting their containment into a sheltered front space. The same screen lower ending with a rectilinear border to be in parallel with the bottom on the back borders of the front seats and externally having an outline in comparison with the cabin transversal section with in prosecution a receded border (2) with spaced holes (3). For the mounting the screen (1) is to be preliminary attached to an aluminium alloy draw piece support frame (4), to be shaped in comparison with the border (2), by constraint means (5) to be inerted into the holes (3) of the screen border (2) and the holes (6) of the frame (4). The formed body is then to be solidary connected on its outline on the side and roof walls of the cabin by other passing means (7) to be inserted through spaced holes (8) onto the frame (4). In this way it is realized, for the condition of contact between the screen and the back parts of the front seats (9), a bar barrier.

## Description

The invented apparatus consists of a removable safety light body for the taxi driver providing the cabin separation by transversal setting out with rapid mounting of a sole transparent thief-proof screen. Said body comes to back project so permitting to include the backs of the front seats in a cabin separated from the other part in which the fare gets on whereas inside the complete view is maintained. The screen to be connected, by connecting means to be put in prearranged constrained seats, on a draw piece supporting frame to be provided with outline reference with the transversal section outline to close. In this way the frame comes to be completed with the screen positioned directly over the back lines of the front seats. A barrier is so formed consisting of two matched parts of which one only of possible tampering from outside and the other where is not possible the use of breaking tools. The barrier formed by two obstructing matched parts is the main characteristic of the apparatus such, coming to be substantially reduced the screen height in comparison with the cabin height, it is possible to realize said removable safety single body also by the occasional operator. In relation said occasional operator will be able to make the mounting and the taking-down of the invented safety body so to use the car for the relative necessities. The taxi service is to be consider a service with risks for the driver infact into the cabin the same driver is to be in contact with the unknown behaviour of the fares and the gravity of said risks comes to change on the base of the different types of fares.

In relation to the types of fares are to be considered: a) the service made for habitual fares where, apart from the presence of socially dangerous persons like phychopathics and drug addicts, the risk for the driver is very low; b) the third-party service, to be make for example on behalf of companies, in which the risk is highly related to the activity of the company: the risk could be very high in the case of a infectious disease clinic and the risk could be middle for an agency seat; c) the service made for transport fares in small towns of in outskirts where the public transport means are not sufficient and where the taxi comes to be an obliged alternative to said public means like trains of buses and where the risk, also in presence of an often known fares, comes to raise; d) the service made for casual fares, for example made in a city, where the risk of a robbery comes to be high in particular in the night time and in the places with scanty traffic. As can be understood from these situations there are cases where the use of a safety body would be in discrepancy with the type of service to made and other cases, which are the majority of the considered cases, where the use of a safety body will be very useful. But currently, try to make a screened body for the driver, the designers have had a basic problem unsurmontable for the current technology providing level separators and cars of small dimensions. In said current cars the ripartition of the cabin space is essentially studied for a sitting person. For this reason, also not considering the negative view given by a similar body, its disposition behind the front seats comes to considerably reduce the movement space for the person to be transported so making unconfortable the use of the taxi.

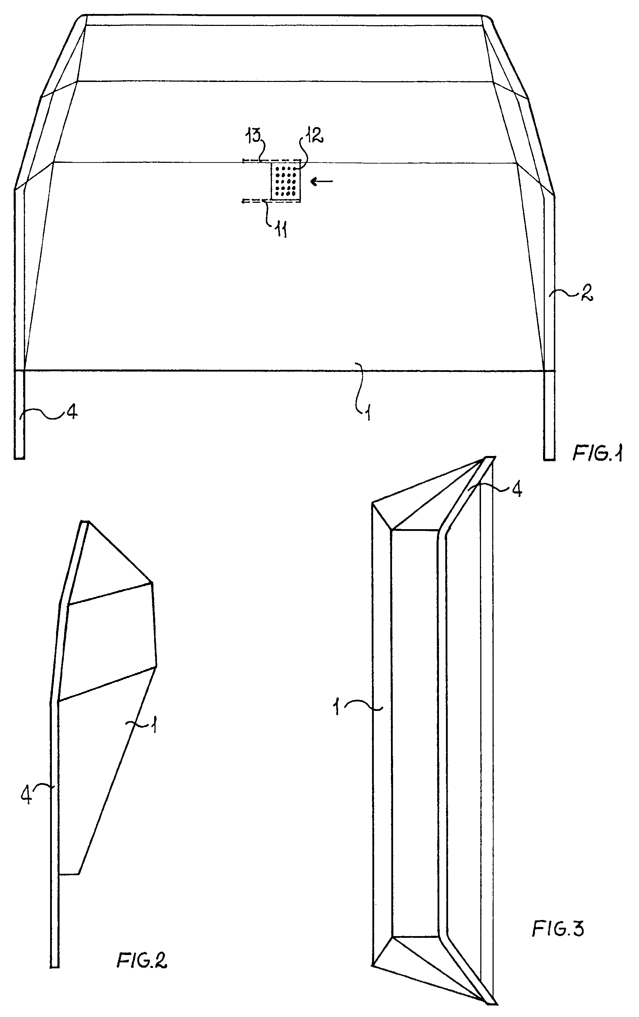

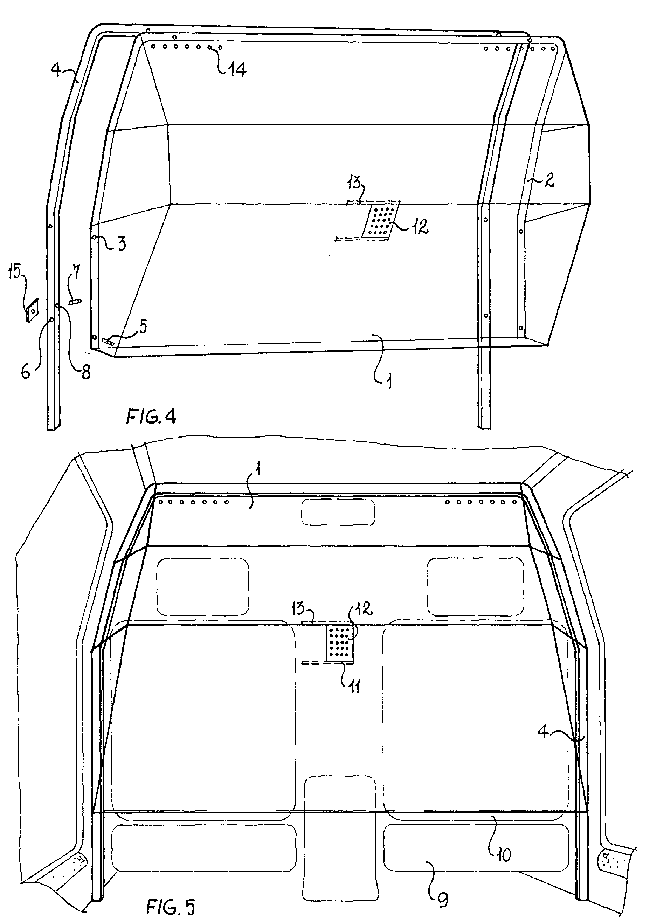

At present this problem is only resolved with the realization of particular cars with cabins equipped with prefixed separated spaces for the driver and the transported persons. Said cars, to be only used for particular safety services such the valuables transport or for the transport of protected persons, cannot be used for the normal taxi service owing to their high cost and for their unpleasant view that make appear them like a prison van and also owing to the impossibility to temporary transform them for the use like a normal car. The invented apparatus given a solution to this problem with a new light screened theif-proof body with a rapid mounting and, in case of necessity, to be taken down for the different use of the car. Said apparatus consists of a transparent slab-shape body with a particular form so permitting its transversal disposition to contain the front seats on their back and lateral walls and so forming a sole barrier to preclude the cabin space together with the underlying walls of the same front seats and maintaining all the operative space of the car and all the view both inside that outside. In this way a new apparatus particularly to be used in the "do-it-yourself" sector is created to be used for equipping a car for making public taxi service. In a preferred embodiment the screen is to be industrially produced with low cost by an only pressing phase of polycarbonate material of appropriate thickness. In said embodiment a sole thief-proof transparent shab-shape screen is provided in polycarbonate material of appropriate thickness to be made for pressing and with dimensions in relation to the characteristic of the car on which it must be mounted. Said screen to be shaped with back matched convexity 1 to be in relation with the back limit encumbrance where arrive the backs of the front seats so permitting their containment into a sheltered front space. The same screen lower ending with a rectilinear border to be in parallel with the bottom on the back borders of the front seats and externally said screen having an outline in comparison with the cabin transversal section with in prosecution a receded border 2 with spaced holes 3. For the mounting the screen 1 is to be preliminary attached to an aluminium alloy draw piece support frame 4, to be shaped in comparison with the border 2, by constraint means 5 to be inserted into the holes 3 of the screen border 2 and the holes 6 of the frame 4. The so formed body is then to be solidarily connected on its outline on the side and roof walls of the cabin by other passing means 7 to be inserted through spaced holes 8 onto the frame 4. In this way it is realized, for the condition of contact between the screen and the back parts of the front seats 9, a bar barrier coming to divide the cabin in two spaces: a front space to be accessible by the driver by means of the front doors and a back space to be accessible by the transported persons by means of the back doors. The transversal disposition of the screen with its convexity 1 back delimiting the theorical encumbrance space of the backs 10 and its ending border suspended on the seats 9, coming to be integrated into the real design space of the front seats, permits to maintain all the movement space inside the cabin. Being the barrier realized by the superimposition of the screen 1 and of the back parts of the seats 9, it permits to realize the screen 1 with border 2 with an height permitting its easy movement into the cabin and also its enter through the back doors.Using constraint passing means with automatic fitting up, it is possible to reduce the times for mounting and taking-down the screen 1 with border 2. The use of the frame 4, with its outline in comparison with the transversal section line of the cabin, permits to maintain in working position the same frame 4 with the screen 1 with border 2 during the mounting and taking-down phases of the body. The use on a thief-proof 1 with border 2 in light material and with reduced encumbrance in comparison with the transversal section of the cabin to be precluded permits to mount and take-down the body from the car with mnemonic sequences so arranging the car for the alternative use. To have the payment from the fare the driver uses an opening 11 centrally presents on the screen to be closed by means of a bored part 12 sliding on jaw 13 permitting the comunication between the two persons. To permit the passage of the conditioning air from the front space to the back one is upper provided a set of holes 14. To permit a clear sound into the two spaces of the cabin is provided an interphonic plant. In an embodiment the frame 4 is to be connected on the wall of the cabin on which already a plate 15 is fixed. The body and the formed barrier are illustrated by way of not limiting example in the drawings of sheets 1, 2, 3 and 4. In sheet 1 is illustrated the screen 1 with border 2 already connected on the frame 4. In details fig. 1 is back frontal view of the body. Fig. 2 is side view of the body. Fig. 3 is top view of the body. In sheet 2 the fig. 4 is perspective back side view of the screen 1 with border 2 before to be connected with the frame 4. Fig. 5 is back frontal view of the body formed by the screen 1 and the frame 4 mounted inside the cabin and seen from the point of view of the fare.

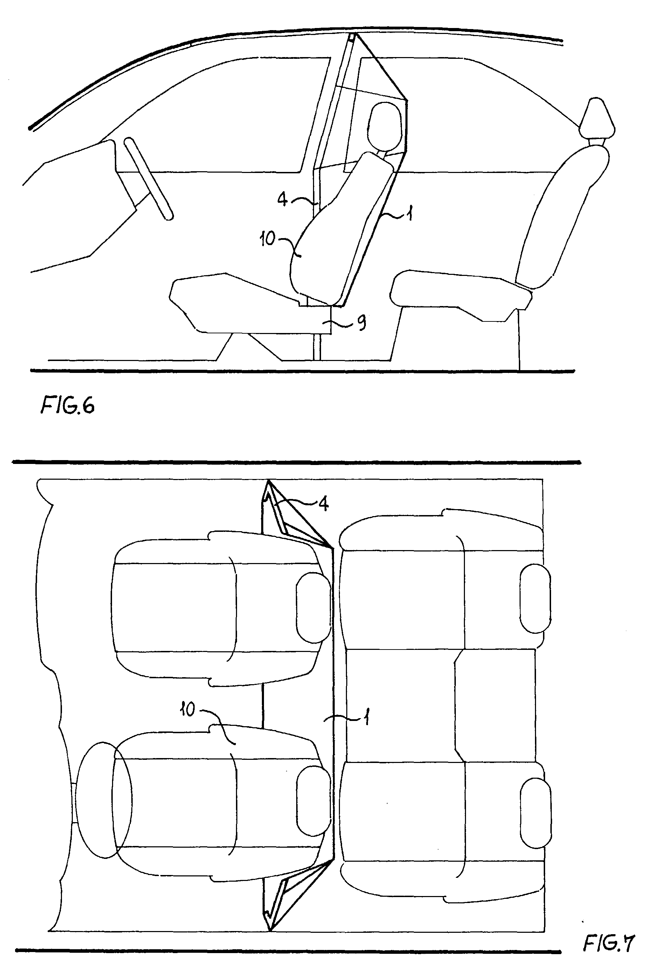

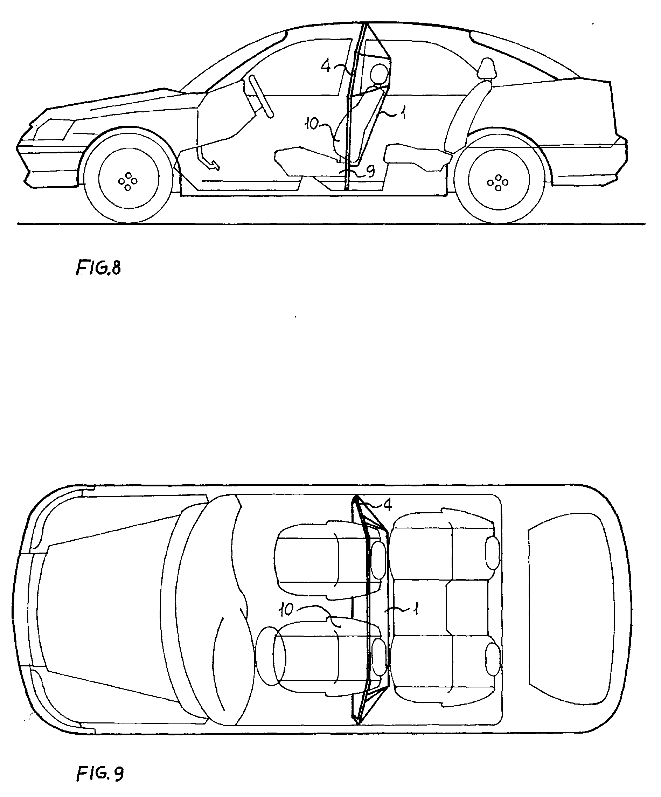

In sheet 3 fig. 6 in partial longitudinal view of a cabin with the body in position. Fig. 7 is partial transversal view of a cabin with the body in position. In sheet 4 the fig. 8 is broken view to show from outside laterally a cabin with the body. Fig. 8 is broken view to show from the top the cabin with the body.

In the different embodiments the body formed by the screen 1 and by the frame 4 is to be realized with reference to the different types and characteristics of the cars on which must be mounted. Moreover also different materials and different constraint means are to be used.

## Claims

1. Removable thief-proof screen for a taxi forming a sheltered driver's cabin letting the complete view consisting of a sole thief-proof transparent shab-shape screen in polycarbonate material of appropriate thickness to be made for pressing and with dimension in relation to that of the car on which it must be mounted; characterized in that:
- said screen is shaped with back matched convexity (1) to be in relation with the back limit encumbrance where arrive the backs of the front seats so permitting their containment into a sheltered front space and it lower ending with a rectilinear border to be in parallel with the bottom on the back borders of the front seats and externally said screen having an outline in comparison with the cabin transversal section with in prosecution a receded border (2) with spaced holes (3);
- for mounting said screen (1) is to be preliminary attached to an aluminium alloy draw piece support frame (4), to be shaped in comparison with the border (2), by constraint means (5) to be inserted into the holes (3) of the screen border (2) and the holes (6) of the frame (4); the so formed body is then to be solidarily connected on its outline on the side and roof walls of the cabin by other passing means (7) to be inserted through spaced holes (8) onto the frame (4); in this way it is realized, for the condition of contact between the screen and the back parts of the front seats (9), a bar barrier coming to divide the cabin in two spaces: a front space to be accessible by the driver by means of the front doors and a back space to be accessible by the transported persons by means of the back doors.

2. Removable thief-proof screen for a taxi forming a sheltered driver's cabin letting the complete view, as per claim 1), characterized in that the transversal disposition of the screen with its convexity (1) backly delimiting the theorical encumbrance space of the backs (10) and its ending border suspended on the seats (9), coming to be integrated into the real design space of the front seats, permits to maintain all the movement space inside the cabin.

3. Removable thief-proof screen for a taxi forming a sheltered driver's cabin letting the complete view, as per claim 1), characterized in that being the barrier realized by the superimposition of the screen (1) and of the back parts of the seats (9), it permits to realize the screen (1) with border (2) with an height permitting its easy movement into the cabin and also its enter through the back doors.

4. Removable thief-proof screen for a taxi forming a sheltered driver's cabin letting the complete view, as per claim 1), characterized in that using constraint passing means with automatic fitting up, it is possible to reduce the times for mounting and taking-down the screen (1) with border (2).

5. Removable thief-proof screen for a taxi forming a sheltered driver's cabin letting the complete view, as per claim 1), in that the use of the frame (4), with its outline in comparison with the transversal section line of the cabin, permits to maintain in working position the same frame (4) with the screen (1) with border (2) during the mounting and taking-down phases of the body.

6. Removable thief-proof screen for a taxi forming a sheltered driver's cabin letting the complete view, as per claim 1), characterized in that in an embodiment the frame (4) is to be connected on the wall of the cabin on which already a plate (15) is fixed.
